# EUROPEAN PATENT SPECIFICATION

(11) **EP 2 134 635 B1**
(45) Date of publication and mention of the grant of the patent: **23.02.2011**
(21) Application number: 07789542.3
(22) Date of filing: 11.04.2007
(51) Int. Cl.: B65G 47/68, B65G 47/88, B67B 3/06

(54) **CAP FEEDING UNIT HAVING SHIFTED STARWHEELS**
KAPSELZUFÜHREINHEIT MIT VERSETZTEM STERNRAD
UNITÉ D'ALIMENTATION EN CAPUCHONS AYANT DES ROUES EN ÉTOILE DÉCALÉES

(43) Date of publication of application: 23.12.2009
(73) Proprietor: Sidel Participations, 76930 Octeville Sur Mer (FR)
(72) Inventor: LENZI, Mauro, 76930 Octeville-sur-Mer (IT)
(74) Representative: Demulsant, Xavier
(86) International application number: PCT/IB2007/002104
(87) International publication number: WO 2008/125898

(56) References cited:
- EP-A- 0 782 888
- DE-A1- 19 522 036
- JP-A- 2005 247 444

## Description

### FIELD OF THE INVENTION

The invention relates to the container industry, and more specifically to the capping of containers.

Once filled, containers are immediately capped, at a capping unit, with caps supplied by a cap feeding unit at a feeding rate equal to the capping rate (i.e. to the filling rate). Nowadays such a rate can reach up to several tens of thousands units per hour. Therefore, it is critical that the cap feeding unit work with maximum speed and minimum stops.

### BACKGROUND OF THE INVENTION

In an ordinary cap feeding unit, caps are supplied from a hopper into a cap feeding line where a single row of caps is moved by gravity towards the capping unit. One drawback of such a technique is that, given the speed of the caps, which is very high, there is a risk of cap jamming along the feeding line. Some manufacturers resolved this problem by providing poka-yoke solutions, see e.g. European patent EP 0 782 888 (Lenzi). However, such a solution increases complexity of cap handling, since ejected caps must be collected and fed back to the hopper.

It is known to multiply the feeding lines in order to decrease the speed of the caps in each line and therefore decrease the risk of cap jamming. However, complexity of such a solution resides in the merging of the cap feeding lines. Japanese patent application JP 2005247444 (Mitsubishi) provides an air-based solution wherein, at a junction area of two cap feeding lines, compressed air is pulsed to the caps to move them towards a single receiving line. However, in such a solution, the risk remains that in the junction area the caps collide and therefore block each other, thereby resulting in cap-jamming. It must be noted that, in addition to the necessity of stopping the machine and detangle the caps, cap collision often leads to bad surface condition on the caps.

### SUMMARY OF THE INVENTION

It is therefore an object of the invention to provide a cap feeding unit allowing increased feeding rates.

It is another object of the invention to provide a cap feeding unit with enhanced reliability.

The proposed cap feeding unit comprises:
- a first cap feeding line receiving a first row of caps,
- at least one second cap feeding line receiving a second row of caps, said first and second cap feeding lines merging into one single cap feeding line at a junction area,
- a rotary drive unit positioned in the vicinity of the junction area and including:
- a first starwheel comprising a plurality of radial arms engaging the first row of caps, and
- at least one second starwheel comprising a plurality of radial arms engaging the second row of caps and positioned with an angular shift with respect of the first starwheel.

The above and other objects and advantages of the invention will become apparent from the detailed description of preferred embodiments, considered in conjunction with the accompanying drawings.

### BRIEF DESCRIPTION OF THE DRAWINGS

**FIG.1** is a partly cut front elevation view of a cap feeding unit according to the invention.
**FIG.2** is a side elevation view of a cap feeding unit according to the invention.
**FIG.3** is an enlarged cut view showing a rotary drive unit of a cap feeding unit according to the invention.
**FIG.4A-4E** are schematic elevation views illustrating movement of a cap feeding unit according to the invention.

### DESCRIPTION OF PREFERRED EMBODIMENTS

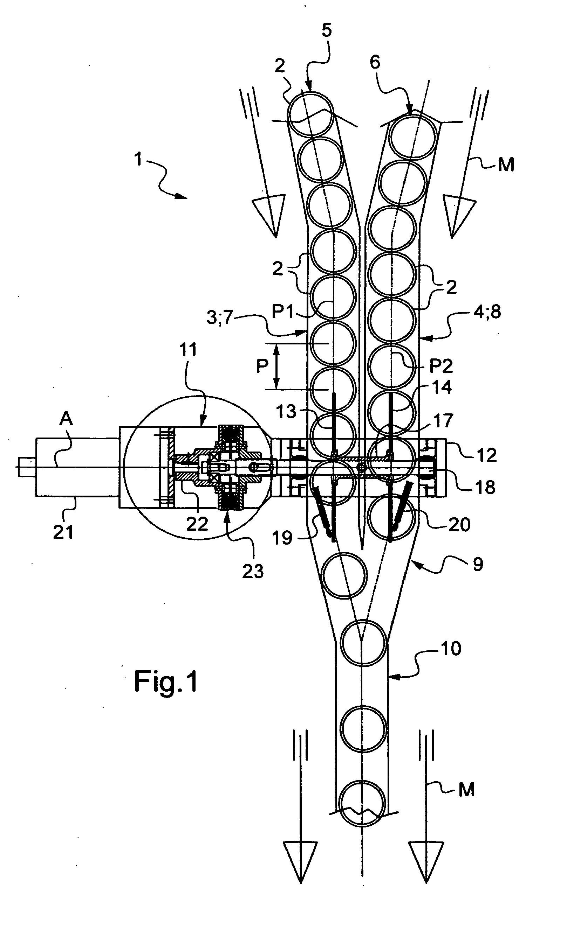

Turning to **FIG.1****,** there is shown a cap feeding unit **1** as part of a container handling machine in which molded containers are rinsed, filled and then capped. Caps **2** are put in bulk in at least one hopper (not shown), for example of the rotating/vibrating plate type, standing on top of a machine frame.

Caps **2** are fed from the hoppers into at least two cap feeding lines, e.g. one first cap feeding line **3** receiving a first row **5** of caps **2,** and at least one second cap feeding line **4** receiving a second row **6** of caps **2.** All caps **2** of a same row have their concavity oriented in the same way, preferably upwardly with respect of the machine frame.

The cap feeding lines **3, 4** may be connected to a common hopper, or to different hoppers. The cap feeding lines **3, 4** are preferably formed of stainless steel wire guides.

The cap feeding lines **3, 4** have a horizontal portion which, depending upon the machine speed rate and/or capacity, may run all or partly along the machine frame, either longitudinally or transversely. In the vicinity of a machine frame edge, cap feeding lines **3, 4** each have a bend and, downstream the bend, a vertical portion **7, 8** wherein the concavity of the caps **2** is oriented outwardly with respect of the machine frame.

As depicted on **FIG.1****,** the vertical portions **7, 8** of the feeding lines **3, 4** run parallel to each other before they merge at a Y-shaped junction area **9** into one single cap feeding line **10,** in which caps **2** coming alternately from the first and second feeding lines **3, 4** are fed to a capping unit (not shown), where caps **2** are put on the mouths of the containers and screwed thereto. On **FIG.1****,** movement of the caps **2** is indicated by arrows **M**. As caps **2** are moved by gravity in the vertical portions **7, 8** of the feeding lines **3, 4,** so that the caps **2** are in permanent contact with each other, the linear pitch **P** between two adjacent caps **2,** i.e. the distance between their central axis along the row **5, 6,** is equal to their external diameter.

Cap feeding unit **1** further comprises a rotary drive unit **11** positioned in the vicinity of the junction area **9.** More precisely, rotary drive unit **11** is positioned immediately upstream the junction area **9,** at the end of the vertical parallel portions **7, 8** of the feeding lines **3, 4.**

Rotary drive unit **11** is provided with a bracket **12** fastened to the cap feeding lines **3, 4** and comprises a pair of star wheels **13, 14** which are pivotally mounted on the bracket **12** so as to rotate around a horizontal axis **A** perpendicular to the moving direction **M** of the caps **2.**

More precisely, the rotary drive unit **11** comprises:
- a first star wheel **13** comprising a plurality of paddle-shaped radial arms **15** engaging the concave portion of the caps **2** of the first row **5,**
- at least one second star wheel **14** comprising a plurality of paddle-shaped radial arms **16** engaging the concave portion of the caps **2** of the second row **6.**

Each star wheel **13, 14** extends and rotates in a symmetry plane **P1, P2** of the corresponding row **5, 6** of caps **2.** Both star wheels **13, 14** are fixed to a common hub **17,** fixed in turn to a driven rotary shaft **18,** so the star wheels **13, 14** rotate simultaneously at the same speed.

In each star wheel **13, 14,** the curvilinear distance - i.e. the distance measured along the periphery of the star wheel **13, 14 -** between radial ends of two adjacent arms **15, 16** is substantially equal to the linear pitch **P** of the corresponding row **5, 6** of caps **2,** so that the star wheel **13, 14** and the corresponding row **5, 6** of caps **2** mesh as a rack-and-pinion gear.

The number of arms **15, 16** and the angular pitch of each star wheel **13, 14** depends upon the diameter of the wheel **13, 14.** In the depicted example, each star wheel **13, 14** has eight arms **15, 16** (i.e. the angular pitch is 45°) and has a diameter which is substantially equal to **3·P.**

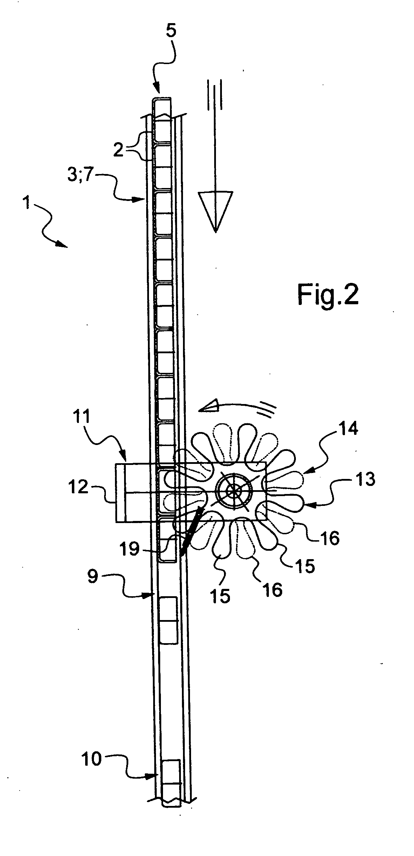

As depicted on **FIG.2****,** the second star wheel **14** is positioned with an angular shift with respect of the first star wheel **13,** equal to half the angular pitch between the arms **15, 16** (22,5° in the depicted example), whereby the second row **6** of caps **2** is vertically shifted of half the linear pitch **P** with respect of the first row **5,** and the caps **2** of the first row **5** and second row **6** are alternately chucked, across the Y-shaped junction area **9,** to the single downstream feeding line **10.**

Accordingly, the flow of caps **2** fed from the first and second rows **5, 6** to the single cap feeding line **10** is precisely controlled, and the risk of cap jamming in the Y section **9** is considerably minimized.

The rotary speed of the star wheels **13, 14** is set to such a value that the linear speed of the radial ends of the arms **15, 16** is substantially equal to the linear speed of the caps **2** as if they were freely falling along the vertical portions **7, 8** of the feeding lines **3, 4,** so that the caps **2** are not slew down due to the presence of the star wheels **13, 14.**

As depicted on **FIG.1****,** the cap feeding unit **1** is provided with at least a pair of air nozzles **19, 20** which are directed both toward the concave portion of the caps **2** and downward, immediately downstream the star wheels **13, 14,** in order to accelerate the caps **2** in the junction area **9.**

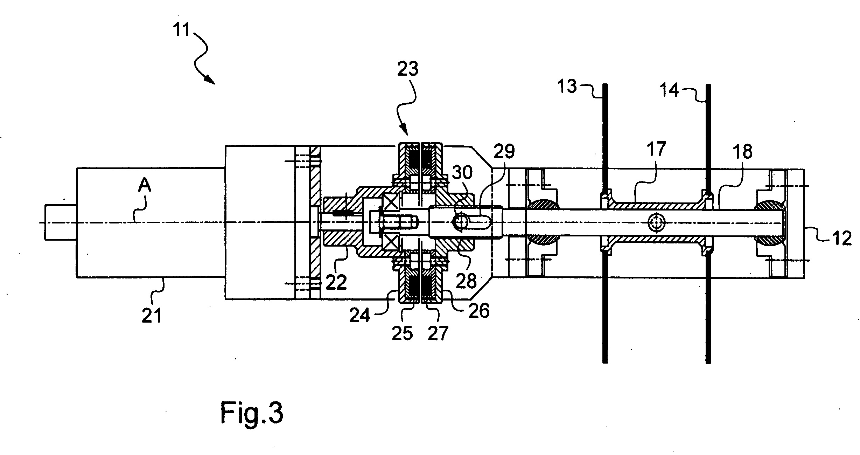

As depicted on **FIG.3****,** the rotary drive unit **1** further comprises a motor **21,** a driving shaft **22** coupled to the motor **21,** and a clutch **23** which couples the driving shaft **22** to the driven shaft **18.**

The clutch **23,** of the magnetic type, comprises a first clutch disc **24** fixed to the driving shaft **22** and including a first annular set **25** of permanent magnets, and a second clutch disc **26** fixed to the driven shaft **18** and including a second annular set **27** of permanent magnets facing the first annular set **25** of permanent magnets.

Accordingly, the driven shaft **18** is pivotally coupled to the driving shaft **22,** so that the motor **21** rotates the driven shaft **18 -** and therefore the star wheels **13, 14 -** at a predetermined angular speed, as long as no resistant torque applies to at least one star wheel **13, 14** or, in case such a resistant torque applies, until this resistant torque is lower than a maximum clutch coupling torque.

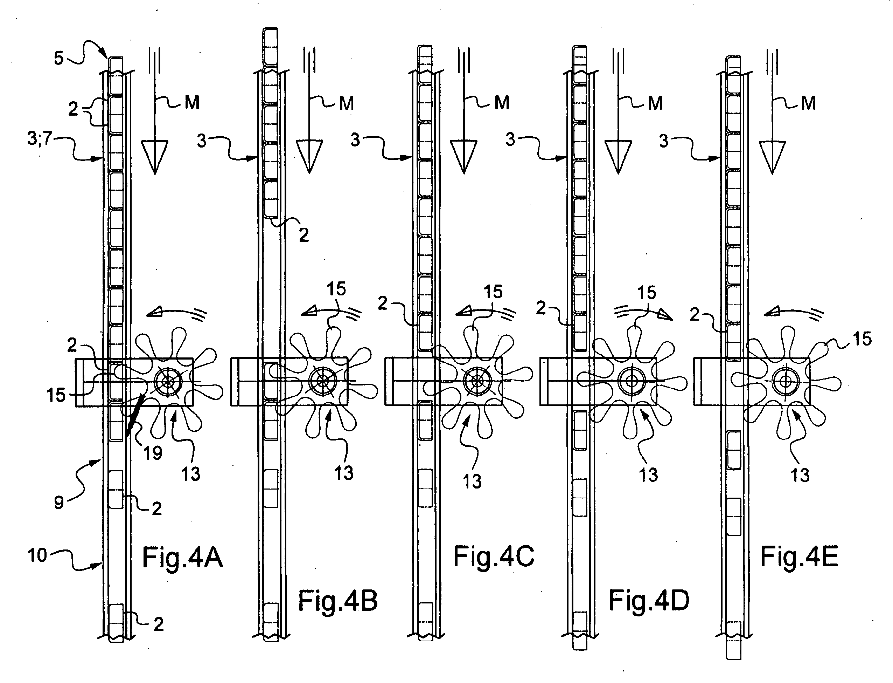

No resistant torque applies to the star wheels **13, 14** as long as the rows **5, 6** of caps **2** and the star wheels **13, 14** correctly mesh **(****FIG.4A****),** i.e. as long as there is no interruption in the flow of caps **2.**

However, such an interruption may occur **(****FIG.4B****).** One arm **15** may then hit the edge of a cap **2** of the next coming row, as depicted on **FIG.4C****.** In such a situation, the corresponding star wheel **13** is blocked in rotation as the resistant torque exerted by the cap **2** is greater than the maximum clutch coupling torque. The driven shaft **18** is then uncoupled from the driving shaft **22** and, in reaction to the hit, the star wheel **13** is shifted back over a small angle **(****FIG.4D****),** thereby allowing the cap **2** to move forward. After a fraction of a second, the driven shaft **18** is coupled back to the driving shaft **22,** and the star wheel **13** can engage the corresponding row **5** of caps **2** again **(****FIG.4E****).**

In a preferred embodiment, the rotary drive unit **1** is provided with means for setting the maximum clutch coupling torque by setting the distance between the annular sets **25, 27** of magnets. In the depicted example **(****FIG.3****),** these setting means are means for moving the second clutch disc **26** along the rotary axis **A** of the driven shaft **18.**

More precisely, the second clutch disc **26** is screwed onto a threaded end portion **28** of the driven shaft **18,** which is provided with an elongated hole **29.** A coupling pin **30** is inserted through both the second clutch disc **26** and the elongated hole **29** in the driven shaft **18,** thereby preventing any rotation therebetween. Setting the position of the second clutch disc **29** along the driven shaft **18** is achieved by removing the coupling pin **30,** screwing - or unscrewing - the clutch disc **26** and, once reached the desired position, putting the coupling pin **30** back in position.

## Claims

1. A cap feeding unit **(1)** comprising:
- a first cap feeding line **(3)** receiving a first row of caps **(2),**
- at least one second cap feeding line **(4)** receiving a second row of caps **(2),**
- said first and second cap feeding lines **(3, 4)** merging into one single cap feeding line **(10)** at a junction area **(9),**
said cap feeding unit **(1)** being **characterized in that** it further comprises a rotary drive unit **(11)** positioned in the vicinity of the junction area **(9)** and including:
- a first starwheel **(13)** comprising a plurality of radial arms **(15)** engaging the first row of caps **(2),**
- at least one second starwheel **(14)** comprising a plurality of radial arms **(16)** engaging the second row of caps **(2)** and positioned with an angular shift with respect of the first starwheel **(13).**

2. A cap feeding unit **(1)** according to claim 1, wherein the angular shift is equal to half the angular pitch between the arms **(15, 16).**

3. A cap feeding unit **(1)** according to claim 1 or 2, wherein the distance between radial ends of two adjacent arms **(15, 16)** is substantially equal to the linear pitch of the rows **(5, 6)** of caps.

4. A cap feeding unit **(1)** according to any of claims 1-3, wherein the rotary drive unit **(11)** comprises a driven rotary shaft **(18)** on which the starwheels **(13, 14)** are mounted.

5. A cap feeding unit **(1)** according to claim 4, wherein the rotary drive unit **(11)** comprises:
- a motor **(21),**
- a driving shaft **(22)** coupled to the motor **(21),**
- a clutch (23) which couples the driving shaft **(22)** to the driven shaft **(18).**

6. A cap feeding unit **(1)** according to claim 5, wherein said clutch (23) comprises:
- a first clutch disc **(24)** fixed to the driving shaft **(22),** said first clutch disc **(24)** including a first annular set **(25)** of permanent magnets,
- a second clutch disc **(26)** fixed to the driven shaft **(18),** said second clutch disc **(26)** including a second annular set **(27)** of permanent magnets facing said first annular set **(25)** of permanent magnets.

7. A cap feeding unit (1) according to claim 6, wherein the rotary drive unit **(11)** comprises means **(28, 29, 30)** for moving said second clutch disc **(26)** along the rotary axis **(A)** of the driven shaft **(18).**

## Patentansprüche

1. Kapselzuführeinheit (1), die Folgendes aufweist:
- Eine erste Kappenzuführzeile (3), die eine erste Reihe von Kappen (2) aufnimmt,
- mindestens eine zweite Kappenzuführzeile (4), die eine zweite Reihe von Kappen (2) aufnimmt,
- wobei die ersten und zweiten Kappenzuführzeilen (3, 4) in einem Verbindungsbereich (9) in eine einzige Kappenzuführzeile (10) vereinigt werden,
wobei die Kappenzuführeinheit (1) **dadurch gekennzeichnet ist, dass** sie weiterhin
eine Drehantriebseinheit (11) aufweist, die in der Nähe des Verbindungsbereichs (9) positioniert ist und Folgendes aufweist:
- Ein erstes Sternrad (13), das eine Mehrzahl von Radialarmen (15) aufweist, die die erste Reihe von Kappen (2) in Eingriff nehmen,
- mindestens ein zweites Sternrad (14), das eine Mehrzahl von Radialarmen (16) aufweist, die die zweite Reihe von Kappen (2) in Eingriff nehmen, und das mit einer Winkelverschiebung im Verhältnis zu dem ersten Sternrad (13) positioniert ist.

2. Kappenzuführeinheit (1) nach Anspruch 1, wobei die Winkelverschiebung gleich der Hälfte des Teilungswinkels zwischen den Armen (15, 16) ist.

3. Kappenzuführeinheit (1) nach Anspruch 1 oder 2, wobei der Abstand zwischen den Radialenden von zwei aneinander angrenzenden Armen (15, 16) im Wesentlichen gleich der Linearsteigung der Reihen (5, 6) von Kappen ist.

4. Kappenzuführeinheit (1) nach einem der Ansprüche 1-3, wobei die Drehantriebseinheit (11) eine angetriebene Drehwelle (18) aufweist, worauf die Sternräder (13, 14) angebracht sind.

5. Kappenzuführeinheit (1) nach Anspruch 4, wobei die Drehantriebseinheit (11) Folgendes aufweist:
- Einen Motor (21),
- eine mit dem Motor (21) verbundene Antriebswelle 22,
- eine Kupplung (23), die die Antriebswelle (22) mit der Abtriebswelle (18) verbindet.

6. Kappenzuführeinheit (1) nach Anspruch 5, wobei die Kupplung (23) Folgendes aufweist:
- Eine an der Antriebswelle (22) befestigte erste Kupplungsscheibe (24), wobei die erste Kupplungsscheibe (24) einen ersten ringförmigen Satz (25) von Dauermagneten aufweist,
- eine an der Abtriebswelle (18) befestigte zweite Kupplungsscheibe (26), wobei die zweite Kupplungsscheibe (26) einen zweiten ringförmigen Satz (27) von Dauermagneten aufweist, die dem ersten ringförmigen Satz (25) von Dauermagneten gegenüberliegen.

7. Kappenzuführeinheit (1) nach Anspruch 6, wobei die Drehantriebseinheit (11) Mittel (28, 29, 30) zum Bewegen der zweiten Kupplungsscheibe (26) entlang der Drehachse (A) der Abtriebswelle (18) aufweist.

## Revendications

1. Unité d'alimentation en capuchons (1) comprenant :
- une première chaîne d'alimentation en capuchons (3) recevant une première rangée de capuchons (2),
- au moins une deuxième chaîne d'alimentation en capuchons (4) recevant une deuxième rangée de capuchons (2),
- lesdites première et deuxième chaînes d'alimentation en capuchons (3, 4) fusionnant à une zone de jonction (9) pour former une seule chaîne d'alimentation en capuchons (10),
- ladite unité d'alimentation en capuchons (1) étant **caractérisée en ce qu'**elle comprend en outre une unité d'entraînement de type rotatif (11) positionnée à proximité de la zone de jonction (9) et comprenant :
- une première roue en étoile (13) comprenant une pluralité de bras s'étendant radialement (15) qui sont mis en engagement avec la première rangée de capuchons (2),
- au moins une deuxième roue en étoile (14) comprenant une pluralité de bras s'étendant radialement (16) qui sont mis en engagement avec la deuxième rangée de capuchons (2) ladite deuxième roue en étoile étant positionnée avec un décalage angulaire par rapport à la première roue en étoile (13).

2. Unité d'alimentation en capuchons (1) selon la revendication 1, ledit décalage angulaire étant égal au pas angulaire entre les bras (15, 16).

3. Unité d'alimentation en capuchons (1) selon la revendication 1 ou 2, la distance entre les extrémités radiales de deux bras adjacents (15, 16) étant sensiblement égale au pas linéaire des rangées (5, 6) de capuchons.

4. Unité d'alimentation en capuchons (1) selon l'une quelconque des revendications 1-3, l'unité d'entraînement de type rotatif (11) comprenant un arbre rotatif mené (18) sur lequel les roues en étoile (13, 14) sont montées.

5. Unité d'alimentation en capuchons (1) selon la revendication 4, l'unité d'entraînement rotative (11) comprenant :
- un moteur (21),
- un arbre menant (22) couplé au moteur (21),
- un embrayage (23) qui couple l'arbre menant (22) à l'arbre mené (18).

6. Unité d'alimentation en capuchons (1) selon la revendication 5, ledit embrayage (23) comprenant:
- un premier disque d'embrayage (24), fixé à l'arbre menant (22), ledit premier disque d'embrayage (24), comprenant un premier ensemble annulaire (25) d'aimants permanents,
- un deuxième disque d'embrayage (26), fixé à l'arbre mené (18), ledit deuxième disque d'embrayage (26), comprenant un deuxième ensemble annulaire (27) d'aimants permanents positionné face audit premier ensemble annulaire (25) d'aimants permanents.

7. Unité d'alimentation en capuchons (1) selon la revendication 6, ladite l'unité d'entraînement rotative (11) comprenant des moyens (28, 29, 30) servant à déplacer ledit deuxième disque d'embrayage (26) le long de l'axe rotatif (A) de l'arbre mené (18).
